# EUROPÄISCHE PATENTSCHRIFT

(11) **EP 2 833 108 B1**
(45) Veröffentlichungstag und Bekanntmachung des Hinweises auf die Patenterteilung: **15.02.2017**
(21) Anmeldenummer: 13003779.9
(22) Anmeldetag: 30.07.2013
(51) Int. Cl.: G01K 17/10

(54) **Verfahren zur Bestimmung der benötigten Leistung eines Wärmeerzeugers**
Method for determining the output required from a heat generator
Procédé de détermination de la puissance nécessaire d'un générateur de chaleur

(43) Veröffentlichungstag der Anmeldung: 04.02.2015
(73) Patentinhaber: ista International GmbH, 45131 Essen (DE)
(72) Erfinder: Linden, Jens, Dr., 45131 Essen (DE); Böwer, Bernd, 41539 Dormagen (DE)
(74) Vertreter: Cohausz Hannig Borkowski Wißgott

(56) Entgegenhaltungen:
- DE-A1- 3 617 061
- DE-A1- 3 730 529

## Beschreibung

Die Erfindung betrifft ein Verfahren zur Bestimmung der benötigten Leistung eines Wärmeerzeugers, mittels dem in einer Liegenschaft sowohl innerhalb wenigstens eines Brauchwasserkreislaufes Brauchwasser, als auch innerhalb wenigstens eines Heizwasserkreislaufes Heizwasser für die Raumbeheizung erwärmt wird.

Im Stand der Technik ist es bekannt, einen Wärmeerzeuger bedarfsgerecht auszulegen, wofür nach bisherigen Methoden beispielsweise für die Bestimmung des Leistungsbedarfes für die Raumbeheizung unter der Annahme bestimmter zugrunde gelegter Eingangsgrößen eine Heizlastberechnung durchgeführt wird. Als Grundlage für eine solche Berechnung dienen beispielsweise die Architektur des Gebäudes, sowie die physikalischen Eigenschaften der verwendeten Baumaterialien.

Für die Bestimmung des Leistungsbedarfes bei der Warmwasserbereitung wird beispielsweise zurückgegriffen auf das Verfahren der Bedarfskennzahl nach DIN4708.

Das Dokument DE 36 17 061 A1 beschreibt die Bestimmung und Anzeige der abgegebenen Wärmemenge eines Wärmeerzeugers mittels eines Wärmemengenzählers. DE 37 30 529 A1 beschreibt ein Verfahren zur Bestimmung der Leistung eines Wärmeerzeugers.

Die Verfahren weisen demnach alle den Nachteil auf, dass die zugrunde gelegten Annahmen gegebenenfalls von der tatsächlichen Realität abweichen und dass die ermittelten Werte gegebenenfalls unter Berücksichtigung eines Sicherheitszuschlages verwendet werden, um einen Wärmeerzeuger auszulegen, wodurch ein Wärmeerzeuger, schon zur Erzielung einer rechtlichen Absicherung des Heizungsmonteurs oftmals überdimensioniert wird.

Darüber hinaus liegt das Problem vor, dass sich eine Liegenschaft im Laufe der Zeit signifikant ändern kann, beispielsweise hinsichtlich des vorliegenden Isolationsstandards. Insbesondere wird heutzutage zur Erfüllung gesetzlicher Vorgaben bei Modernisierungsmaßnahmen einer Liegenschaft eine deutlich verbesserte Isolation der äußeren Gebäudehülle erzielt, so dass ein in dem Gebäude bestehender Wärmeerzeuger sich beispielsweise nach der Mordernisierungsmaßnahme als überdimensioniert erweisen kann.

Darüber hinaus kann der Leistungsbedarf für die Warmwasseraufbereitung und für die Raumbeheizung signifikant auseinanderfallen, so dass sich die Frage stellt, nach welchem konkreten Leistungsbedarf die Auslegung des Wärmeerzeugers zu erfolgen hat. Dies ist nicht zwingend immer die Auslegung nach dem Raumheizungsbedarf, da beispielsweise von sogenannten Passivhäusern mit sehr hohem Isolationsstandard bekannt ist, dass der Leistungsbedarf für die Warmwasserbereitung deutlich höher ist als für die Raumbeheizung.

Im Zuge von Modernisierungsmaßnahmen einer Liegenschaft stellt sich somit oftmals die Frage, wie ein gegebenenfalls vorhandener Wärmeerzeuger zu modifizieren ist, beispielsweise in der Leistung zu reduzieren ist, wenn sich eine solche Möglichkeit an dem Gerät erschließt, oder durch welches neue Gerät ein Bestandsgerät sinnvollerweise zu ersetzen ist.

Es ist daher die Aufgabe der Erfindung, ein Verfahren der eingangs genannten gattungsgemäßen Art bereitzustellen, bei dem nicht unter Berücksichtigung lediglich angenommener theoretischer Werte eine Leistungsbestimmung vorgenommen wird, sondern bei dem diese Leistungsbestimmung an Hand des konkreten Bedarfes in einer Liegenschaft ermittelt werden soll.

Bevorzugter Weise ist es dabei auch eine Aufgabe der Erfindung ein Verfahren bereitzustellen, welches herstellerunabhängig eingesetzt werden kann, demnach also eine Möglichkeit zur Bestimmung der benötigten Leistung eines Wärmeerzeugers gefunden wird, mit welchem nicht zwingend Zugriff genommen werden muss auf evtl. Daten die an herstellerspezifischen Schnittstellen eines bestehenden Wärmeerzeugers abrufbar sind.
Diese Aufgabe wird erfindungsgemäß durch mehrere Teilschritte gelöst, wobei bei einem Verfahren der eingangs genannten gattungsgemäßen Art für eine Messzeit von wenigstens einem Tag, bevorzugt für mehrere Tage jeweils wiederholend aus wenigstens einem Messwert eines Wärmemengenzählers in dem wenigstens einen Brauchwasserheizkreislauf ein Tageswert der für die Brauchwassererwärmung innerhalb eines Tages verbrauchten Energiemenge bestimmt wird.

Weiterhin ist es erfindungsgemäß vorgesehen, dass aus wenigstens einem Messwert eines Wärmemengenzählers in dem wenigstens einen Heizwasserkreislauf ein Tageswert, der für die Heizwassererwärmung innerhalb eines Tages verbrauchten Energiemenge bestimmt wird.

Das erfindungsgemäße Verfahren setzt demnach voraus, dass getrennte Heizkreisläufe sowohl für Brauchwasser, als auch für Heizwasser, d.h. für die Raumbeheizung vorgesehen sind und dass in jedem dieser Kreisläufe mittels jeweils eines Wärmemengenzählers die jeweils innerhalb des Tages verbrauchte gesamte Energiemenge bestimmt werden kann.

Beispielsweise können die dafür eingesetzten Wärmemengenzähler einen Tagesspeicher aufweisen, in welchem ein solcher Messwert tagesweise zur Verfügung gestellt wird. Dabei kann es beispielsweise vorgesehen sein, dass ein solcher Tagesmesswert aus einem Wärmemengenzähler von extern abgerufen wird, oder aber auch automatisch vom Wärmemengenzähler nach außen hin kommuniziert wird.

In Liegenschaften kann es auch vorkommen, dass nicht nur ein Brauchwasserkreislauf und ein Heizkreislauf vorhanden sind, sondern jeweils mehrere. Beispielsweise kann in jeder von mehreren Wohnungen einer Liegenschaft z.B. in Verbindung mit Nahversorgungsstationen jeweils ein Brauchwasserkreislauf und ein Heizwasserkreislauf vorhanden sein. In einem solchen Fall kann jeder der Kreisläufe einen Wärmemengenzähler aufweisen.

Ein Tageswert der für die Brauchwassererwärmung innerhalb eines Tages in einer Liegenschaft verbrauchten Energiemenge kann somit durch die Summe der einzelnen Tageswerte der einzelnen Wärmemengenzähler bestimmt werden. Gleiches gilt für die Heizwassererwärmung.

Ein üblicher Fall wird jedoch darin gegeben sein, dass ein (einziger) Brauchwasserkreislauf und ein (einziger) Heizwasserkreislauf vorhanden ist und jeder dieser Kreisläufe einen Wärmemengenzähler aufweist.

Gemäß der Erfindung ist es weiterhin vorgesehen, dass aus dem Tageswert der an dem Tag für die Brauchwassererwärmung aufgewendeten Energiemenge ein Tages-Leistungswert für die Brauchwassererwärmung bestimmt wird. Sofern die Brauchwassererwärmung fortwährend parallel zur Heizwassererwärmung stattfindet, kann zur Berechnung dieses Tages-Leistungswertes der Tageswert der Energiemenge durch 24 Stunden dividiert werden.

Die Erfindung kann weiterhin auch berücksichtigen, dass innerhalb eines Tages ggfs. nicht fortwährend eine Brauchwassererwärmung stattfindet, sondern nur zu bestimmten Zeiten, beispielsweise unmittelbar nachdem erwärmtes Brauchwasser oder Wasser zur Erwärmung von Brauchwasser aus einem Speicher entnommen wurde. In einem solchen Fall liegt ein Vorrangbetrieb der Brauchwassererwärmung vor statt ein Parallelbetrieb.

In dem Fall wenn es nicht bekannt ist, ob ein Vorrangbetrieb oder ein Parallelbetrieb gegeben ist und dies im Rahmen des Verfahrens automatisch ermittelt wird, kann es erfindungsgemäß vorgesehen sein, dass unter Verwendung wenigstens eines an dem wenigstens einen Brauchwasserheizkreislauf angeordneten Sensors die Gesamtzeit der Brauchwassererwärmung an einem Tag bestimmt wird.

Das erfindungsgemäße Verfahren sieht in diesem Fall sodann weiterhin vor, dass aus dieser Gesamtzeit dieser Brauchwassererwärmung an einem Tag und dem Tageswert der an dem Tag für die Brauchwassererwärmung aufgewendeten Energiemenge ein Tages-Leistungswert für die Brauchwassererwärmung bestimmt wird. Es wird so sichergestellt, dass ein Leistungswert für die Brauchwassererwärmung bestimmt, insbesondere berechnet wird, welcher die benötigte Leistung für die Brauchwassererwärmung innerhalb der benötigten Gesamtzeit an einem Tag bereitstellt.

Rechnerisch wird hierfür, insbesondere in einer nachfolgend noch benannten Datenverarbeitungsanlage die Tagesenergiemenge durch diese festgestellte Gesamtzeit dividiert, insbesondere ggfs. unter Berücksichtigung weiterer Korrekturen. Diese Gesamtzeit wird bei einem Parallelbetrieb bei 24 Stunden liegen, so dass auch aus diesem Messwert automatisch auf einen Parallelbetrieb geschlossen werden kann. Bei einem Vorrangbetrieb wird die Gesamtzeit kleiner als 24 Stunden sein, insbesondere wesentlich kleiner sein.

Weiterhin ist es erfindungsgemäß vorgesehen, aus einem Tageswert der an dem Tag für die Heizwassererwärmung aufgewendeten Energiemenge einen Tages-Leistungswert für die Heizwassererwärmung zu bestimmen.

Eine solche Bestimmung kann in einem einfachsten Fall rechnerisch, insbesondere wiederum mit einer nachfolgend noch weiter zu benennten Datenverarbeitungsanlage dadurch erfolgen, dass der Tageswert, der an dem Tag für die Heizwassererwärmung aufgewendeten Energiemenge durch 24 Stunden dividiert wird, um einen Tages-Leistungswert für die Heizwassererwärmung zu erhalten, insbesondere dann, wenn ein Parallelbetrieb vorliegt oder wenn im einfachsten Fall im Wesentlichen angenommen wird, dass die Gesamtzeit der Brauchwassererwärmung an 24 Stunden eines Tages einen vergleichsweise geringen, insbesondere verschwindenden zeitlichen Anteil hat.

Bei einem Vorrangbetrieb hingegen kann es vorgesehen sein, den Tagesleistungswert der Heizwassererwärmung ggfs. unter Berücksichtigung weiterer Korrekturen zu bestimmen.

Eine genauere Durchführung des erfindungsgemäßen Verfahrens, insbesondere bei einem vorliegenden Vorrangbetrieb kann es auch vorsehen, den Tageswert, der an dem Tag für die Heizwassererwärmung aufgewendeten Energiemenge zu dividieren durch eine korrigierte Stundenanzahl, die sich ergibt als eine Stundenzahl von 24 Stunden abzüglich derjenigen Gesamtzeit, insbesondere abzüglich derjenigen Stunden, der/die für die Brauchwassererwärmung aufgewendet werden.

So wird erfindungsgemäß bei einem Vorrangbetrieb bei dieser bevorzugten Variante demnach von 24 Stunden die Gesamtzeit der Brauchwassererwärmung abgezogen, die gemäß dem zuvor genannten Verfahrensschritt unter Verwendung wenigstens eines an dem wenigstens einen Brauchwasserkreislauf angeordneten Sensors ermittelt wird. Auch bei dieser Variante können noch weitere Korrekturen vorgenommen werden.

Sofern mehrere Brauchwasserkreisläufe in einer Liegenschaft vorhanden sind, kann es das erfindungsgemäße Verfahren bei einem Vorrangbetrieb weiterhin vorsehen, für jeden der einzelnen Brauchwasserkreisläufe die Tagesenergiemenge und die jeweilige Gesamtzeit festzustellen, die an einem Messtag für die Brauchwassererwärmung aufgewendet wird, um so für jeden Brauchwasserkreislauf jeweils einen Tagesleistungswert festzustellen und sodann für die erfindungsgemäße Fortführung des Verfahrens hieraus einen zu verwendenden Tagesleistungswert zu bilden. Z.B. kann dafür aus allen diesen Tagesleistungswerten ein maximaler Tagesleistungswert und/oder Summen einzelner Tagesleistungswerte gebildet werden, insbesondere wenn gleichzeitige Brauchwasserbereitung vorliegt bei mehreren Brauchwasserkreisläufen.

Erfindungsgemäß ergeben sich demnach aus dieser Durchführung des Verfahrens unabhängig davon, ob Parallelbetrieb oder Vorrangbetrieb vorliegt an jedem Tag der Durchführung und somit wenigstens einmal sowohl ein Tages-Leistungswert für die Brauchwassererwärmung, als auch einen Tages-Leistungswert für die Heizwassererwärmung, so dass ein weiterer erfindungsgemäßer Verfahrensschritt nun vorsieht, in Abhängigkeit wenigstens eines solchen Tages-Leistungswertes für die Brauchwassererwärmung und wenigstens eines Tages-Leistungswertes für die Heizwassererwärmung die benötigte Leistung des Heizkessels zu ermitteln.

Erfindungsgemäß wird dies in Kenntnis eines solchen Wertepaares von beiden Leistungswerten durch fallweise verschiedene Methoden, nämlich in Abhängigkeit von Parallelbetrieb oder Vorrangbetrieb erfolgen, wie nachfolgend noch beschrieben wird.

Erfindungswesentlich ist es weiterhin, dass automatisiert festgestellt wird, ob ein Vorrangbetrieb oder Parallelbetrieb vorliegt, dadurch, dass sowohl für den Heizwasserkreislauf als auch für den Brauchwasserkreislauf in Zeitintervallen jeweils ein Zustandswert ermittelt wird, der anzeigt, ob innerhalb eines Zeitintervalles eine aktive Beheizung vorliegt und für jedes Zeitintervall der Zustandswert des Brauchwasserkreislaufes mit dem Zustandswert des Heizwasserkreislaufes verglichen wird und durch den Vergleich darauf geschlossen wird, ob ein Vorrangbetrieb oder Parallelbetrieb vorliegt.

Ein bevorzugte Weiterbildung des erfindungsgemäßen Verfahren kann hier vorsehen, dass die Bestimmung der benötigten Leistung des Heizkessels aus diesen vorgenannten Daten innerhalb einer Datenverarbeitungsanlage erfolgt, insbesondere die extern zu der betrachteten Liegenschaft angeordnet ist, beispielsweise bei einem Servicedienstleister, der die Leistungsbestimmung für den Inhaber der Liegenschaft durchführt.

Hier kann es demnach vorgesehen sein, dass zumindest die Tageswerte der für die Brauchwassererwärmung und Heizwassererwärmung innerhalb eines Tages verbrauchten Energiemenge, insbesondere auch wenigstens ein Messwert des wenigstens einen an dem wenigstens einen Brauchwasserkreislauf angeordneten Sensors, mit dem (jeweils) die Gesamtzeit der Brauchwassererwärmung an einem Tag bestimmt wird, in eine Datenverarbeitungsanlage übertragen werden, insbesondere über wenigstens ein Telekommunikationsnetz, wenn die Datenverarbeitungsanlage wie zuvor benannt beispielsweise extern der Liegenschaft angeordnet ist.

Hierbei kann es beispielsweise vorgesehen sein, dass die Tageswerte der für die Brauchwassererwärmung und für die Heizwassererwärmung innerhalb eines Tages verbrauchten Energiemenge vom jeweiligen Wärmemengenzähler über dessen jeweilige Kommunikationsschnittstelle über ein Telekommunikationsnetz, insbesondere ein erstes Telekommunikationsnetz in eine Datenverarbeitungsanlage übertragen werden.

Diese Erfindungsvariante nutzt aus, dass einige Wärmemengenzähler moderner Bauart bereits über eine Kommunikationsschnittstelle verfügen, beispielsweise um nach bisherigem Stand der Technik Jahresverbrauchswerte zu einem bestimmten Stichtag an eine Datenverarbeitungsanlage zu übersenden, zum Beispiel um eine jährliche Verbrauchskostenabrechnung vorzunehmen.

Es kann demnach im Rahmen des erfindungsgemäßen Verfahrens vorgesehen sein, dieselbe Kommunikationsschnittstelle dieser Wärmemengenzähler zu verwenden, um auch Tagesmesswerte der an einem Tag verbrauchten Energiemenge für Brauchwassererwärmung bzw. Heizwassererwärmung nach außen hin, d.h. zu einer Datenverarbeitungsanlage hin zu kommunizieren. Für diesen Fall kann es vorgesehen sein erfindungsgemäß weitergebildete Wärmemengenzähler zu verwenden, die eingerichtet sind Tageswerte der verbrauchten Energiemenge zu erfassen und bereitzustellen, insbesondere zusätzlich zu Jahresstichtagswerten der verbrauchten Energiemenge.
Bei der genannten Datenverarbeitungsanlage kann es sich beispielsweise um dieselbe Datenverarbeitungsanlage handeln, welche Jahresmesswerte von diesen Wärmemengenzählern empfängt, so dass eine solche Datenverarbeitungsanlage organisatorisch einem Abrechnungsdienstleister zugeordnet sein kann.

Das erfindungsgemäße Verfahren macht sich dabei zunutze, dass Wärmemengenzähler entweder bereits eingerichtet sind, oder im Rahmen des erfindungsgemäßen Verfahrens eingerichtet werden können, um nicht nur Jahresverbräuche zu einem bestimmten Stichtag zu speichern und über ihre Kommunikationsschnittstelle in eine Datenverarbeitungsanlage zu versenden, sondern auch in einem kürzeren Zeitrythmus hier insbesondere täglich Tagesmesswerte für die jeweils an dem Tag verbrauchte Energiemenge erstellen und über ihre Kommunikationsschnittstelle versenden oder zumindest zum Abruf zur Verfügung stellen. Beispielsweise kann dies erzielt werden, wenn die Software, die in einer Elektronik eines solchen Wärmemengenzählers zum Einsatz kommt, so ausgebildet ist oder für die Durchführung des Verfahrens ausgebildet / geändert wird, dass (auch) Energiemesswerte im Rhythmus eines Tages erfasst und gespeichert werden.

Wie Eingangs genannt ist es, wenn die Betriebsart automatisch festgestellt werden soll erfindungsgemäß vorgesehen, dass mittels wenigstens eines Sensors an dem wenigstens einen Brauchwasserkreislauf eine Information darüber gewonnen wird, welche gesamte Zeit die Brauchwassererwärmung an einem Tag in dem (jeweiligen) Brauchwasserkreislauf einnimmt. Erfindungsgemäß kann es dabei vorgesehen sein, einen dafür geeigneten Sensor durch verschiedene Varianten bereitzustellen.

Beispielsweise kann es hier vorgesehen sein, dass der für die Gesamtzeitermittlung verwendete Sensor am Brauchwasserkreislauf gebildet wird, durch denselben Wärmemengenzähler, der im Brauchwasserkreislauf auch eingesetzt wird, um die Tagesenergiemenge zu bestimmen.

Demnach kann es in einer bevorzugten Variante des Verfahrens vorgesehen sein, dass ein solcher Wärmemengenzähler erfindungsgemäß eingerichtet ist, unmittelbar selbst die Gesamtzeit der Brauchwassererwärmung an einem Tag zu ermitteln und einen diese Gesamtzeit anzeigenden Wert, bzw. repräsentierenden Wert bereitzustellen. Beispielsweise kann die Gesamtzeit ermittelt werden anhand der Zeit (bevorzugt in Stunden), welche ein durch den Wasserfluss im Wärmemengenzähler angetriebenes Element (z.B. Flügelrad etc.) in Betrieb, insbesondere Rotation ist.

Bei einer solchen Ausführung kann demnach die Gesamtzeit der Brauchwassererwärmung an dem eingesetzten Wärmemengenzähler unmittelbar zur Verfügung gestellt werden. Es kann bei dieser erfindungsgemäßen Ausführung demnach auch vorgesehen sein, dass dieser die Gesamtzeit der Brauchwassererwärmung repräsentierende Wert in gleicher Weise über dieselbe Kommunikationsschnittstelle des Wärmemengenzählers an eine Datenverarbeitungsanlage übertragen wird, wie der Tagesenergiewert. Diese Ausführung hat demnach auch den Vorteil, dass lediglich ein einziges Telekommunikationsnetz, insbesondere das zuvor genannte erste Telekommunikationsnetz verwendet wird.

Eine andere Ausführung des Verfahrens kann es auch vorsehen, dass zwar wiederum der Wärmemengenzähler eines Brauchwasserkreislaufes den Sensor am Brauchwasserkreislauf bildet, der für die Bestimmung der Gesamtzeit eingesetzt wird, dass jedoch durch den Wärmemengenzähler selbst nicht unmittelbar die Gesamtzeit der Brauchwassererwärmung festgestellt wird, sondern dass bei dieser Verfahrensvariante in mehreren, insbesondere aneinander anschließenden jeweils gleichlangen Zeitintervallen eines Tages, jeweils ein den Heizzustand des Brauchwasserkreislaufes in dem jeweiligen Zeitintervall anzeigender Zustandswert ermittelt wird. Ein solcher Zustandswert kann beispielsweise anzeigen, dass der Brauchwasserkreislauf in dem jeweils betrachteten Zeitintervall, erwärmt wird, oder nicht erwärmt wird. Demnach kann ein Zustandswert beispielsweise den Wert "ein" oder "aus" annehmen, bzw. zwecks einfacher datentechnischer Verarbeitung den Wert "eins" oder den Wert "null" annehmen.

Ein Wärmemengenzähler kann z.B. eingerichtet sein, an einem elektronischen Ausgang ein zum Zustand korrespondierendes elektronisches Signal an dem Ausgang bereit zu stellen, dass zyklisch aktualisiert wird, z.B. jeweils nach Ablauf eines genannten Zeitintervalls oder aber auch eingerichtet sein, in einen internen Speicher für jedes Zeitintervall einen den jeweiligen Zustand repräsentierenden Wert zu speichern, insbesondere für eine spätere Abfrage oder Versendung im Rahmen einer Kommunikation.

Es liegt demnach bei dieser Verfahrensvariante für jedes der vielen Zeitintervalle eines Tages ein solcher jeweiliger Zustandswert vor, so dass die Gesamtzeit einer Brauchwassererwärmung beispielsweise ermittelt werden kann, durch Multiplikation der Anzahl derjenigen Zustandswerte, die den eingeschalteten bzw. beheizten Zustand des Brauchwasserkreislaufes anzeigen multipliziert mit der zeitlichen Dauer eines einzelnen der gleichlangen Zeitintervalle.

Bei dieser Verfahrensvariante kann es demnach vorgesehen sein, dass ein Wärmemengenzähler für jedes der Zeitintervalle einen Zustandswert bildet und diesen Zustandswert beispielsweise wieder über seine Kommunikationsschnittstelle an die Datenverarbeitungsanlage überträgt.

Dabei kann es beispielsweise vorgesehen sein, dass jeder Zustandswert separat für sich übertragen wird, insbesondere in jedem Zeitintervall, oder aber auch, dass alle Zustandswerte aus den verschiedenen vielen Zeitintervallen eines Tages lediglich einmalig pro Tag übertragen werden, beispielsweise zusammen mit dem Tagesmesswert der an einem Tag verbrauchten Energiemenge innerhalb des Brauchwasserheizkreislaufes.

Es besteht sodann bei dieser Ausführungsform die Möglichkeit innerhalb der Datenverarbeitungsanlage aus allen erhaltenen Zustandswerten, insbesondere eines jeweiligen Wärmemengenzähler, wenn mehrere vorhanden sind, die insbesondere jeweilige Gesamtzeit der Brauchwassererwärmung zu bestimmen - wie zuvor beschrieben - und hieraus sodann die Tagesleistung für den Brauchwasserkreislauf zu ermitteln und wie eingangs genannt in Verbindung mit der Tagesleistung des Heizkreislaufes die benötigte Leistung für den Wärmeerzeuger zu ermitteln.

Sofern ein Wärmemengenzähler im Brauchwasserkreislauf nicht unmittelbar gemäß der vorher benannten Ausführungsform einen Zustandswert ermittelt, für den Heizzustand des Brauchwasserkreislaufes, also ob dieser in dem jeweiligen Zeitintervall erwärmt wird oder nicht, kann eine weitere alternative Ausführungsform vorsehen, dass in mehreren, insbesondere aneinander anschließenden jeweils gleichlangen Zeitintervallen eines Tages wenigstens ein Temperaturmesswert mittels eines Temperatursensors des Wärmemengenzählers erfasst wird, aus dem jeweils ein den Heizzustand des Brauchwasserkreislaufes in dem jeweiligen Zeitintervall anzeigender Zustandswert ermittelt wird, oder zumindest ermittelbar ist.

So kann bei dieser Ausführungsvariante zumindest ein üblicherweise an einem Wärmemengenzähler vorhandener Temperatursensor für die Temperaturmesswerterfassung eingesetzt werden, um aus dem wenigstens einen Temperaturmesswert innerhalb eines vorgenannten Zeitinterwalles einen Zustandswert zu bilden, beispielsweise wie er bereits bei der vorgenannten Ausführungsform definiert wurde.

Auch hier kann die Ausführungsform vorsehen, dass der wenigstens eine Temperaturmesswert eines jeden von den gleichlangen Zeitintervallen mittels der in dem Wärmemengenzähler vorhandenen Kommunikationsschnittstelle in die bereits genannte Datenverarbeitungsanlage übertragen wird, so dass auch diese Ausführungsvariante den Vorteil aufweist, dass lediglich ein einziges, nämlich das vorgenannte Telekommunikationsnetz verwendet wird, um sämtliche für das erfindungsgemäße Verfahren benötigte Daten an die Datenverarbeitungsanlage zur Verfügung zu stellen.

Eine andere Ausführungsvariante kann es auch vorsehen, dass als Sensor am Brauchwasserkreislauf ein Temperatursensor Verwendung findet, der nicht Teil des Wärmemengenzählers ist, also ein separater Temperatursensor, der beispielsweise als Anlegesensor oder als Tauchsensor an oder in der Rohrleitung des Brauchwasserkreislaufes im Vor- und/oder Rücklauf zum Einsatz kommt.

Je nach Ausführungsvariante kann es hier vorgesehen sein, nur einen Sensor, also einen Temperatursensor oder auch mehrere Sensoren einzusetzen, beispielsweise jeweils einen in Vor- und Rücklauf des Brauchwasserkreislaufes, wobei die erfindungsgemäße Ausführungsform nun vorsieht, mittels des wenigstens einen Temperaturmesswertes des wenigstens einen Temperatursensors für jedes betrachtete der mehreren, insbesondere aneinander anschließenden, jeweils gleichlangen Zeitintervallen eines Tages, einen Zustandswert zu ermitteln, der anzeigt, ob im Brauchwasserkreislauf innerhalb des betrachteten jeweiligen Zeitintervalls einer Brauchwassererwärmung stattfindet oder nicht, insbesondere so wie der Zustandswert eingangs definiert wurde.

Hierbei kann die Bestimmung des Zustandswertes innerhalb der Datenverarbeitungsanlage vorgenommen werden, wofür es eine erfindungsgemäße Ausführung vorsieht, die Temperaturmesswerte des wenigstens einen Temperatursensors mittels eines Datenloggers zu erfassen, insbesondere so, dass der Datenlogger innerhalb eines jeweiligen Zeitintervalles von den mehreren, insbesondere jeweils gleichlangen Zeitintervallen eines Tages, wenigstens einen Temperaturmesswert bei jedem eingesetzten Temperatursensor erfasst und speichert und über ein Telekommunikationsnetz, insbesondere ein zweites Telekommunikationsnetz an die Datenverarbeitungsanlage überträgt. Auch diese Übertragung kann für jedes Zeitintervall erfolgen oder gesammelt einmalig pro Tag, insbesondere zusammen mit dem Tages-Energiewert.

Bei dieser Ausführungsvariante ist es demnach vorgesehen, dass die Messwerte eines Wärmemengenzählers bezüglich der an einem Tag verbrauchten Energie im Brauchwasserkreislauf und/oder im Heizwasserkreislauf mittels eines ersten Telekommunikationsnetzes an die Datenverarbeitungsanlage übertragen werden und mittels des genannten, hier eingesetzten Datenloggers die jeweiligen Temperaturmesswerte mittels eines zweiten Telekommunikationsnetzes an die Datenverarbeitungsanlage übertragen werden. Beispielsweise kann ein Datenlogger hierfür seine eigene Kommunikationsschnittstelle aufweisen, zum Beispiel ein Übertragungsmodul gemäß GSM- und/oder GPRS-Standard und/oder UMTS- und / oder LTE-Standard, so dass übliche Mobilfunknetzwerke Verwendung finden können.

Eine bevorzugte Ausführungsvariante kann es hier vorsehen, die bei den zuvor genannten Ausführungsformen benannten Zeitintervalle nicht länger als fünf Minuten zu wählen, um so innerhalb eines Tages eine sehr hohe Auflösung zeitlicher Art zu erhalten, für die Bestimmung des Heizzustandes des Brauchwasserkreislaufes, also mit hoher Genauigkeit zu erfahren, wann im Brauchwasserkreislauf eine Warmwasserbereitung stattfindet und wann nicht.

Bei allen zuvor genannten Ausführungsvarianten, die für jedes der genannten Zeitintervalle einen Zustandswert ermitteln, kann demnach die Bestimmung der Gesamtzeit der Brauchwassererwärmung erfolgen durch Multiplikation der Anzahl aller eine Brauchwassererwärmung anzeigenden Zustandswerte eines Tages mit der Zeitdauer eines einzelnen Zeitintervalles.

Grundsätzlich kann das erfindungsgemäße Verfahren vorsehen, die Verfahrensdurchführung lediglich an einem einzigen Tag durchzuführen und so für diesen speziellen Tag sowohl einen Tagesleistungswert für die Brauchwasserbereitung als auch einen Tagesleistungswert für die Heizwasserbereitung, also die Raumerwärmung zu erzielen.

Eine höhere Genauigkeit erzielt das Verfahren jedoch bei einer erfindungsgemäß bevorzugten Weiterbildung, bei der das zuvor beschriebene Verfahren nicht einmalig nur an einem Tag, sondern an wenigstens zwei Tagen, insbesondere mehrfach für mehrere, insbesondere eine Vielzahl von Tage hintereinander durchgeführt wird. Beispielsweise kann das Verfahren über einen Monat hinweg oder über eine Heizperiode hinweg durchgeführt werden.

Es kann sodann erfindungsgemäß vorgesehen sein, dass bei einer Bestimmung von mehreren Tages-Leistungswerten für die Brauchwassererwärmung und/oder Heizwassererwärmung an verschiedenen, insbesondere aufeinanderfolgenden Tagen für diese beiden Tagesleistungswert-Arten ein jeweiliger neuer Tagesleistungswert bestimmt wird.

In einem einfachsten Fall kann es dabei vorgesehen sein, aus den jeweiligen Tagesleistungswerten von Brauchwassererwärmung und/oder Heizwassererwärmung einen mathematischen Mittelwert zu bilden, der somit im Sinne der Erfindung den neuen Tagesleistungswert darstellt, der für die Bestimmung der Leistung des Wärmeerzeugers verwendet wird.

Andere Ausführungsvarianten können hier vorsehen, dass anhand eines jeweiligen mathematischen Modells in Abhängigkeit wenigstens zweier Tagesleistungswerte, bevorzugt von einer Vielzahl von Tagesleistungswerten von Brauchwassererwärmung und/oder Heizwassererwärmung, ggfs. in Verbindung mit weiteren Parametern wie z.B. der Außentemperatur gebildet wird, ein jeweiliger neuer Tagesleistungswert bestimmt wird.

Dabei ist der Fachmann in der Wahl des bestimmten Modells zur Bildung dieser neuen Tagesleistungswerte grundsätzlich nicht eingeschränkt. Ein gewähltes Modell kann dabei z.B. in einer möglichen Ausführung bei den Tagesleistungswerten für die Heizwassererwärmung die Abhängigkeit des Tagesleistungswertes von der Außentemperatur beschreiben, so dass aus diesem Model z.B. ein neuer Tagesleistungswert ermittelt werden kann für eine bestimmte Außentemperatur, für welche die Auslegung des Wärmeerzeugers erfolgen soll, selbst wenn in den Messwerten konkret keine Tagesleistungs- oder Tagesenergiewerte bei der interessierenden Außentemperatur erfasst wurden.

Eine mögliche weitere Ausführung des Verfahrens kann es hier vorsehen, aus jeweils allen Tagesleistungswerten, die im Rahmen des erfindungsgemäßen Verfahrens für die Brauchwassererwärmung und/oder Heizwassererwärmung bestimmt werden, der maximale Wert als neuer Tagesleistungswert herangezogen wird. Demnach wird bei dieser Verfahrensvariante z.B. für die Brauchwassererwärmung und/oder für die Heizwassererwärmung der maximale Tagesleistungswert aller Werte bestimmt, so dass in jedem Fall eine Auslegung eines Wärmeerzeugers hinsichtlich der benötigten Leistung genügend dimensioniert erfolgt.

Dabei besteht uneingeschränkt die Möglichkeit für die Bestimmung des neuen Tagesleistungswertes der Brauchwassererwärmung ein anderes Modell zu wählen als für die Bestimmung des neuen Tagesleistungswertes der Heizwassererwärmung.

In einer weiteren erfindungsgemäß bevorzugten Ausführungsvariante kann es vorgesehen sein, den Leerstand in einer Liegenschaft als weiteren Parameter zu berücksichtigen.

So ist es ersichtlich, dass die Brauchwassererwärmung weniger Energie an einem Tag benötigt, wenn eine Liegenschaft nicht voll belegt ist. Gleiches gilt in analoger Weise für die Heizwassererwärmung. Es kann demnach diese erfindungsgemäß bevorzugte Weiterbildung vorsehen, dass ein jeder Tagesleistungswert für die Brauchwassererwärmung und/oder für die Heizwassererwärmung vor der Bildung eines neuen Tagesleistungswertes gemäß der vorbenannten Ausführungsvariante oder aber vor einer Ermittlung der benötigten Leistung des Heizkessels korrigiert wird, um eine solche Berücksichtigung eines Leerstandes in einer Liegenschaft vorzunehmen. Eine solche Korrektur kann auch nur für die jeweiligen neuen Tagesleistungswerte erfolgen, sofern die Korrektur für alle Tagesleistungswerte, die in die Bildung eines neuen Tagesleistungswertes eingehen gleich ist.

Diese Berücksichtigung kann beispielsweise dadurch erfolgen, dass eine Multiplikation des jeweiligen Tagesleistungswertes oder neuen Tagesleistungswertes mit einem den Leerstand repräsentierenden Faktor erfolgt.

Ist also beispielsweise eine Liegenschaft zu lediglich 50 % belegt, beispielsweise nur zu 50 % vermietet, oder sind zumindest nur zu 50 % während der Messzeit Räume bewohnt, so könnte der den Leerstand repräsentierenden Faktor in diesem vorliegenden Beispiel den Faktor 2 darstellen, da bei einer vollen Belegung der Liegenschaft demnach mit einer doppelt so hohen benötigten Leistung für die Brauchwassererwärmung und/oder Heizwassererwärmung auszugehen ist.

Wie eingangs erwähnt, sieht es das erfindungsgemäße Verfahren vor, in Abhängigkeit des für den Brauchwasserkreislauf ermittelten Tagesleistungswertes und des für den Heizwasserkreislauf ermittelten Tagesleistungswertes die benötigte Leistung des Heizkessels fallweise verschieden zu ermitteln, wobei erfindungsgemäß zwischen zwei verschiedenen Betriebsvarianten des gesamten Heizungssystems unterschieden wird, nämlich dahingehend, ob die Erwärmung des Brauchwassers vorrangig vor der Erwärmung des Heizwasser stattfindet oder aber ob eine Erwärmung des Brauchwasserheizkreislaufes zeitlich parallel zum Heizwasserkreislauf durchgeführt wird.

So kann es demnach eine erfindungsgemäße Weiterbildung vorsehen, dass bei einer vorrangigen Erwärmung des Brauchwasserkreislaufes vor dem Heizwasserkreislauf die benötigte Leistung des Heizkessels ermittelt wird, als ein Wert größer oder gleich dem Maximum eines Paares von Tagesleistungswerten, insbesondere neuen Tagesleistungswerten gemäß vorgenannter Ausführungsvariante von Brauchwassererwärmung und Heizwassererwärmung.

Hierbei kann im einfachsten Fall das Maximum aus beiden (neuen) Tagesleistungswerten ermittelt werden oder aber der benötigte Leistungswert ermittelt werden durch Berücksichtigung eines Sicherheitsfaktors, mit dem dieser Maximalwert aus beiden Werten multipliziert wird. Demnach ist dieser Sicherheitsfaktor ein Faktor größer 1, um die benötigte Sicherheit zu gewährleisten.

Sofern weiterhin das Heizungssystem eine Nachtabsenkung oder auch eine Nachtabschaltung aufweist, kann es vorgesehen sein, den ermittelten Tagesleistungswert vor der Bestimmung der benötigten Leistung des Wärmeerzeugers zu korrigieren, nämlich insbesondere durch Multiplikation mit dem Verhältnis von Tageslaufzeit zu Gesamtlaufzeit aus Tageslaufzeit und Nachtlaufzeit des Wärmeerzeugers. So wird berücksichtigt, dass zumindest bei einer Nachtabschaltung die gesamte an einem Tag, das heißt innerhalb von 24 Stunden abzüglich der Brauchwassererwärmungszeit aufgebrachte Energiemenge nur innerhalb der Tageseinschaltzeit des Wärmeerzeugers aufgebracht wird.

Bei einer Nachtabsenkung kann es vorgesehen sein, den vorgenannten Faktor mit einer Gewichtung zu versehen, beispielsweise in welchen die Größenordnung der Absenkung gegenüber dem Tagbetrieb Eingang findet, um so zu berücksichtigen, dass zwar ein Teil der an einem Tag aufgebrachten Energiemenge innerhalb des Heizkreislaufes auch während der Nacht erbracht wird, jedoch der überwiegende Teil innerhalb des nicht abgesenkten Betriebes, so dass dieser innerhalb des nicht abgesenkten Betriebes aufgebrachte Energieteil die Bestimmung der Tagesleistung dominiert.

Erfolgt hingegen in dem betrachteten Heizungssystem eine Erwärmung des Brauchwasserkreislaufes parallel zur Erwärmung des Heizwasserkreislaufs, also ohne Priorisierung so kann das erfindungsgemäße Verfahren vorsehen, die benötigte Leistung des Heizkessels zu ermitteln als einen Wert größer oder gleich der Summe von Tagesleistungswert für die Brauchwassererwärmung und Tagesleistungswert für die Heizwassererwärmung.

Die jeweilige Ermittlung nach der einen oder anderen Verfahrensvariante kann dabei jeweils wiederrum durch die Datenverarbeitungsanlage erfolgen, die eingangs benannt wurde und welche von Wärmemengenzähler und/oder Datenlogger die jeweiligen Messwerte empfängt.

Insbesondere wenn seitens des Inhabers einer Liegenschaft oder seitens des Dienstleisters, der vorgenanntes Verfahren im Auftrag des Inhabers durchführt, nicht einwandfrei festgestellt werden kann, zum Beispiel anhand von Angaben am Heizungssystem, ob ein Vorrangbetrieb oder ein Parallelbetrieb von Brauchwasserbereitung und Heizwasserbereitung stattfindet, besteht keine Möglichkeit, eine der beiden Verfahrensvarianten als verbindlich für die Bestimmung des Leistungswertes des Wärmeerzeugers vorab auszuwählen.

Die Erfindung sieht vor automatisiert festzustellen, ob das betrachtete Heizungssystem einen Vorrangbetrieb oder einen Parallelbetrieb von Brauchwasserbereitung und Heizwasserbereitung aufweist.

Erfindungsgemäß kann es vorgesehen sein, dass diese automatische Ermittlung dadurch erfolgt, dass mittels wenigstens eines am Heizwasserkreislauf oder am Abgassystem angeordneten Sensors, insbesondere mittels eines Temperatursensors in mehreren, insbesondere aneinander anschließenden, jeweils gleich langen Zeitintervallen eines Tages von beispielsweise maximal fünf Minuten Dauer ein den Heizzustand des Heizwasserkreislaufes in dem jeweiligen Zeitintervall anzeigender Zustandswert bestimmt wird, insbesondere wobei der Zustandswert anzeigt, ob der Heizwasserkreislauf in einem jeweiligen Zeitintervall aktiv erwärmt wird oder nicht erwärmt wird.

Diese erfindungsgemäße Variante sieht es demnach vor, sowohl für den Heizwasserkreislauf als auch für den Brauchwasserkreislauf in jeweiligen Zeitintervallen, insbesondere in jeweils denselben Zeitintervallen für jeden der beiden Kreisläufe jeweils einen Zustandswert zu ermitteln, der anzeigt, ob innerhalb des gerade betrachteten Zeitintervalles der Heizwasserkreislauf beziehungsweise der Brauchwasserkreislauf aktiv beheizt wird.

Es wird sodann für jedes Zeitintervall der Zustandswert des Brauchwasserkreislaufes mit dem Zustandswert des Heizwasserkreislaufes verglichen und durch diesen Vergleich darauf geschlossen, ob ein Vorrangbetrieb oder ein Parallelbetrieb vorliegt.

Beispielsweise kann auf einen Parallelbetrieb geschlossen werden, wenn durch den Vergleich eine Anzahl von übereinstimmenden Zustandswerten innerhalb eines Tages ermittelt wird, die über einem festgelegten Schwellwert liegt. Bevorzugt wird dabei auf einen Parallelbetrieb geschlossen, wenn die Anzahl von den eingeschalteten, das heißt die aktive Beheizung anzeigenden Zustandswerten über dem genannten Schwellwert liegt

Sofern gemäß einer eingangs beschriebenen Ausführungsvariante ein Zustandswert für den Heizwasserkreislaufes unmittelbar dem jeweils im jeweiligen Kreislauf angeordneten Wärmemengenzähler entnommen werden kann, besteht hier die Möglichkeit, bei der vorbeschriebenen Verfahrensvariante die Zustandswerte nicht aus Temperaturmesswerten zu bilden, sondern unmittelbar den Wärmemengenzählern beider Kreisläufe zu entnehmen und den Vergleich für jedes Zeitintervall vorzunehmen.

Von einem Parallelbetrieb, wird unabhängig davon, ob der Zustandswert direkt dem Wärmemengenzähler entnommen wird oder aus Temperaturmesswerten gebildet wird, insbesondere dann auszugehen sein, wenn mehr als 50 % aller Zustandswerte eines Tages bei Heizkreislauf und Brauchwasserkreislauf übereinstimmend sind, insbesondere die aktive Erwärmung anzeigen.

Soll erfindungsgemäß auf einen Zustandswert mit Hilfe von Temperaturmesswerten geschlossen werden, die mittels Temperatursensoren entweder innerhalb eines Wärmemengenzählers oder aber auch als separater Anlege- oder Tauchfühler erfasst werden, so kann das Verfahren vorsehen, dass auf eine aktive Erwärmung in einem jeweiligen Kreislauf, also entweder dem Brauchwasserkreislauf oder dem Heizwasserkreislauf geschlossen wird, wenn aus den Temperaturmesswerten eines einzelnen Temperatursensors am Kreislauf eine positive zeitliche Ableitung ermittelt wird. Es zeigt sich sodann, dass bei einer solchen positiven zeitlichen Ableitung ein Ansteigen der Temperatur im jeweiligen Kreislauf angezeigt wird, was bedeutet, dass ein Zustand der aktiven Beheizung vorliegt, z.B. zumindest begonnen hat.

Eine andere Ausführungsvariante kann es vorsehen, auf eine aktive Erwärmung in einem jeweiligen Kreislauf zu schließen, wenn zwischen Temperaturmesswerten von Temperatursensoren an Vorlauf und Rücklauf des jeweils betrachteten Heizkreises eine einen Schwellwert übersteigende Differenz ermittelt wird.

Diese auch als Spreizung bezeichnete Differenz ist üblicherweise größer, wenn eine aktive Beheizung vorliegt, da in diesem Fall die in der Vorlaufleitung mitgetragene Wärmeenergie innerhalb des jeweiligen Heizkreislaufes entweder an das Brauchwasser oder aber auch an die Raumluft abgegeben wird und demnach im jeweiligen Rücklauf ein deutlich verringertes Temperaturniveau vorliegt.

Findet hingegen keine aktive Beheizung des Kreislaufes statt, so wird im Wesentlichen auch keine Energie innerhalb des jeweiligen Heizkreislaufes abgegeben, so dass die Temperaturen von Vorlauf und Rücklauf näher beieinander liegen, im Idealfall sogar gleich sind und demnach die Differenz kleiner ist als im Fall der aktive Erwärmung.

Eine Ausführungsvariante kann es auch vorsehen, zumindest bezüglich des Zustandes in der Brauchwasserbereitung wenigstens einen Temperatursensor an einer Brauchwasserzirkulationsleitung anzubringen, die üblicherweise vorgesehen ist, um den Brauchwasserzulaufweg zu den einzelnen Zapfstellen einer Liegenschaft zu verkürzen.

Eine solche Zirkulationsleitung wälzt üblicherweise das in einem Speicher vorhandene Brauchwasservolumen um, so dass durch das Volumen des Brauchwassers innerhalb eines Speichers im Wesentlichen eine Art Filterfunktion bezüglich der Messwerterfassung bei den eingesetzten Temperatursensoren vorliegt und auf eine messtechnische Aufbereitung der Temperaturmesswertes eines jeweiligen Temperatursensors, zum Beispiel mittels elektronischer Filter oder Verstärker verzichtet werden kann.

Auch hier kann es vorgesehen sein, mittels eines einzigen Temperatursensors bei Feststellung einer positiven zeitlichen Ableitung der Temperatur auf einen, insbesondere gerade eingesetzten Erwärmungsbetrieb beim Brauchwasser zu schließen, wobei eine Alternative auch vorsehen kann, jeweils einen Temperatursensor an Vorlauf und Rücklauf einer Brauchwasserzirkulationsleitung vorzusehen und bei einer einen Schwellwert übersteigenden Differenz zwischen den jeweiligen Temperaturmesswerten auf eine aktive Erwärmung des Brauchwasserkreislaufes zu schließen.

Auch der gemessene Volumenstrom des Wärmemengenzählers oder die Momentanleistung, insbesondere wenn man Temperaturmesswerte mitberücksichtigt, kann herangezogen werden, um eine Aktivzeit, insbesondere für die Brauchwasserbereitung zu erkennen.

Das erfindungsgemäße Verfahren zeigt deutlich, dass mit einfachsten Mitteln, insbesondere sogar ohne Rückgriff auf herstellerseitig vorgesehene Schnittstellen an Wärmeerzeugern die Möglichkeit besteht, die benötigte Leistung eines Wärmeerzeugers in einer konkreten Liegenschaft anhand des aktuellen Betriebes zu ermitteln.

Es wird lediglich Rückgriff genommen auf ohnehin in Brauchwasserheizkreisläufen und Heizwasserkreisläufen vorhandene Wärmemengenzähler und gegebenenfalls auf zusätzlich eingesetzte Temperatursensoren, sofern nicht ein solcher eines Wärmemengenzählers unmittelbar mitverwendet werden kann. Lediglich eine Datenübertragung in eine Datenverarbeitungsanlage ist vorausgesetzt, um aus den erfassten, zuvor beschriebenen Messwerten die benötigte Leistung des Wärmeerzeugers zu bestimmen.

Dabei kann die Erfindung vorsehen, die Messwerte durch Telekommunikation zu übertragen, wobei selbstverständlich auch die Möglichkeit besteht, die Messwerte in der Liegenschaft zu speichern und sodann die Speicher aus der Liegenschaft zu entnehmen, zum Beispiel Datenlogger mit denen die Daten aufgenommen werden, um sodann extern mit einer Datenverarbeitungsanlage die Auswertung vorzunehmen.

Ein Ausführungsbeispiel der Erfindung wird anhand nachfolgender Figur verdeutlicht.

Zunächst ist für die Durchführung des Verfahrens davon auszugehen, dass sowohl im Brauchwasserkreislauf als auch im Heizwasserkreislauf einer Liegenschaft Wärmemengenzähler vorhanden sind. Es wird mit beiden Wärmemengenzählern ein Tagesenergiewert für jeden von mehreren Tagen ermittelt, an denen das erfindungsgemäße Verfahren durchgeführt wird. Bezüglich der Brauchwassererwärmung wird durch eines der am einleitenden Teil beschriebenen Verfahrensvarianten die Gesamtzeit bestimmt, in der innerhalb eines Tages, das heißt innerhalb von 24 Stunden, eine Beheizung des Brauchwassers stattfindet, also beispielsweise dadurch, dass ein Zustand der Brauchwasserbereitung unmittelbar dem eingesetzten Wärmemengenzähler entnommen wird oder dadurch, dass mittels wenigstens eines Temperatursensors an der Brauchwasserkreisleitung für jedes von mehreren Zeitintervallen innerhalb eines Tages von beispielsweise höchstens fünf Minuten Dauer ein Zustandswert bestimmt wird.

Die Bestimmung des Tagesleistungswertes für die Raumbeheizung kann für jeden Tag derart erfolgen, dass der Tagesenergiewert eines jeden Tages dividiert wird durch 24 Stunden minus Gesamtzeit der Brauchwasserbereitung. Eine weitere Korrektur kann gegebenenfalls bei Teilleerstand der Liegenschaft erfolgen.

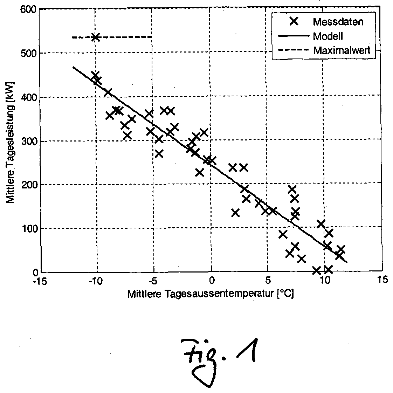

Es kann nun vorgesehen sein, für die erfindungsgemäße Durchführung des Verfahrens zum Zweck der Bestimmung eines Leistungswertes für einen Wärmeerzeuger aus allen so gebildeten Tagesleistungswerten für die Raumbeheizung einen neuen für die Bestimmung heranzuziehenden Tagesleistungswert zu bilden, anhand eines Modelles, aus welchem sich dieser neue Wert ergibt. Eine solche Heranziehung eines Modells ist in der Figur visualisiert.

Beispielsweise kann es hier vorgesehen sein, denjenigen Tagesleistungswert für die Raumheizung zu bestimmen, der bei einer gewünschten Auslegungsaußentemperatur vorliegt und hierdurch zu berücksichtigen, dass für die Raumbeheizung die tägliche aufgewendeten Energiemengen jeweils in üblicher Weise von der Außentemperatur abhängen.

Es besteht demnach erfindungsgemäß die Möglichkeit jeden Tagesleistungswert, der gemäß der vorbeschriebenen Verfahrensvariante bestimmt wurde, jeweils der Außentemperatur zuzuordnen, die an dem jeweiligen Tag vorgelegen hat, für den der Tagesleistungswert bestimmt wurde.

Hierfür kann es vorgesehen sein, die jeweilige, insbesondere mittlere Tagesaußentemperatur mittels eines an der Liegenschaft angeordneten Außentemperatursensors zu erfassen und so für jeden Tag ein Messwertpaar aus Tagesleistungswert und Außentemperatur zu bilden oder aber auch aus einer Datenbank für den Ort der Liegenschaft, den Außentemperaturwert abzufragen oder mit einem Wettervorhersagemodell Außentemperaturwerte zu bilden und hierdurch das Messwertepaar auszubilden.

Es können sodann sämtliche, während der Durchführung des Verfahrens gebildeten Messwertpaare aus Tagesleistungswert und (mittlerer) Außentemperatur mittels eines Modells beschrieben werden, beispielsweise eines linearen statischen Modells, das beispielsweise durch eine in der Figur gezeigte lineare Regressionsgerade die Abhängigkeit von Tagesleistung und (mittlerer) Außentemperatur beschreibt.

Ist ein solches Modell anhand sämtlicher Messwertpaare aus Tagesleistungswert und Außentemperatur gebildet, so kann für jede beliebige interessierende Tagesaußentemperatur die bei dieser Tagesaußentemperatur vorliegende Tagesleistung ermittelt werden. Beispielsweise kann es hier vorgesehen sein, denjenigen Tagesleistungswert als neuen Tagesleistungswert für die Durchführung des Verfahrens heranzuziehen, der bei der tiefsten festgestellten oder auch einer bestimmten zur Auslegung gewählten Außentemperatur vorliegt.

Bei der Bildung des Modells kann es weiterhin vorgesehen sein, eine Gewichtung vorzunehmen, z.B. in dem Sinne, dass den Tagesleistungswerten an Tagen mit einer geringeren Außentemperatur bei der Modellbildung ein größeres Gewicht zugeordnet wird, gegenüber Tagesleistungswerten an solchen Tagen mit einer höheren Außentemperatur.

Die Durchführung einer solchen Modellbildung ist insbesondere dann interessant, wenn das Verfahren an Tagen durchgeführt wird, bei welchen die jeweils zu einem Tagesleistungswert vorliegende Außentemperatur nicht diejenige Außentemperatur mit umfasst, für welche eine Auslegung des Wärmeerzeugers erfolgen soll.

Hier bietet die Modellbildung die Möglichkeit, auf Tagesleistungswerte bei Außentemperaturen zu schließen, die tatsächlich nicht in den Messdaten erfasst wurden.

Sind hingegen Tagesleistungswerte bei Temperaturen an der interessierten Auslegungsaußentemperatur oder kleiner der interessierenden Auslegungsaußentemperatur erfasst worden, so kann es erfindungsgemäß vorgesehen sein, denjenigen Tagesleistungswert als neuen Tagesleistungswert heranzuziehen, der sich entweder unmittelbar aus den Messwerten oder aber aus der gebildeten Modellbeschreibung der Messwertpaare an der Auslegungstemperatur oder bevorzugt an der tiefsten gemessenen Temperatur ergibt.

Die Figur zeigt eine solche Abhängigkeit der jeweils an mehreren Tagen erfassten Tagesleistungswerte für die Raumheizung in Verbindung mit der jeweiligen Tagesaußentemperatur. Hier ist ersichtlich, dass durch die durchgezogene Gerade ein Modell darstellt wird, welches die Abhängigkeit zwischen Tagesleistungswert für die Raumbeheizung und der Außentemperatur beschreibt. Liegt also selbst kein Messwertpaar für Tagesleistungswert und Außentemperatur an genau derjenigen Außentemperatur vor, für welche eine Auslegung des Wärmeerzeugers stattfinden soll, so bietet die Modellbeschreibung die Möglichkeit, für diese Normaußentemperatur einen dann fiktiven Tagesleistungswert zu bestimmen.

Hier zeigt die grafische Darstellung insbesondere auch, dass bei Tagesaußentemperaturen von bis zu -10° C Tagesleistungswerte konkret erfasst wurden, so dass es im vorliegenden Fall sinnvoll ist, eine Auslegung für diesen kältesten anzunehmenden Fall vorzunehmen, sofern nicht durch die Modellbildung noch auf Tagesleistungswerte kleiner als die konkret gemessene Temperatur abgestellt werden soll.

Hier zeigt sich beispielsweise, dass bei -10° C ein Maximalwert der Tagesleistung von etwa 530 KW ermittelt wurde, so dass dieser Wert zusammen mit dem Leistungswert für die Brauchwasserbereitung in das erfindungsgemäße Verfahren eingeht, um die Leistung für den Wärmeerzeuger zu bestimmen.

Aus allen Tagesleistungswerten des Brauchwasserkreislaufes kann ebenfalls ein neuer Tagesleistungswert bestimmt werden, z.B. anhand eines anderen Modells, einfacherweise anhand einer Maximumauswahl aus allen Werten, ggfs. multipliziert mit einem Sicherheitsfaktor.

Allgemein bietet die Erfindung auch die Möglichkeit statt der Durchführung des Verfahrens mit einer Messzeit von einem Tag die Dauer / Länge eines beliebigen ersten Zeitintervalls als Messzeit zu verwenden, in welcher die Werte für die Energiemenge von Brauchwasser- und Heizwassererwärmung erfasst werden, um sodann hieraus Leistungswerte zu bilden, die auf dieses Zeitintervall, oder aber auch auf Tageswerte normiert werden können. Für die jeweilige Zustandsbestimmung wird in diesem Fall ein zweites Zeitintervall gewählt, das kleiner ist als das erste, insbesondere um einen gewünschten Auflösungsfaktor kleiner, insbesondere das nur ein hundertstel bis ein tausendstel der Dauer des ersten Intervalls hat.

## Patentansprüche

1. Verfahren zur Bestimmung der benötigten Leistung eines Wärmeerzeugers, mittels dem in einer Liegenschaft sowohl innerhalb wenigstens eines Brauchwasserkreislaufes Brauchwasser als auch innerhalb wenigstens eines Heizwasserkreislaufes Heizwasser für die Raumbeheizung erwärmt wird, **dadurch gekennzeichnet, dass** für eine Messzeit von wenigstens einem Tag, bevorzugt für mehrere Tage jeweils wiederholend,
a. aus wenigstens einem Messwert eines Wärmemengenzählers in dem wenigstens einen Brauchwasserheizkreislauf ein Tageswert der für die Brauchwassererwärmung innerhalb eines Tages verbrauchten Energiemenge bestimmt wird und
b. aus wenigstens einem Messwert eines Wärmemengenzählers in dem wenigstens einen Heizwasserkreislauf ein Tageswert der für die Heizwassererwärmung innerhalb eines Tages verbrauchten Energiemenge bestimmt wird und
c. aus dem Tageswert der an dem Tag für die Brauchwassererwärmung aufgewendeten Energiemenge ein Tages-Leistungswert für die Brauchwassererwärmung bestimmt wird und
d. aus dem Tageswert der an dem Tag für die Heizwassererwärmung aufgewendeten Energiemenge ein Tages-Leistungswert für die Heizwassererwärmung bestimmt wird und
e. in Abhängigkeit wenigstens eines Tages-Leistungswertes für die Brauchwassererwärmung und wenigstens eines Tages-Leistungswertes für die Heizwassererwärmung die benötigte Leistung des Heizkessels ermittelt wird
f. und wobei in Abhängigkeit davon, ob die Erwärmung des Brauchwassers vorrangig vor der Erwärmung des Heizwassers stattfindet oder ob eine Erwärmung des Brauchwassers zeitlich parallel zum Heizwasserkreislauf stattfindet, die benötigte Leistung fallweise verschieden ermittelt wird,
g. wobei automatisiert festgestellt wird, ob ein Vorrangbetrieb oder Parallelbetrieb vorliegt, dadurch, dass sowohl für den Heizwasserkreislauf als auch für den Brauchwasserkreislauf in Zeitintervallen jeweils ein Zustandswert ermittelt wird, der anzeigt, ob innerhalb eines Zeitintervalles eine aktive Beheizung vorliegt und für jedes Zeitintervall der Zustandswert des Brauchwasserkreislaufes mit dem Zustandswert des Heizwasserkreislaufes verglichen wird und durch den Vergleich darauf geschlossen wird, ob ein Vorrangbetrieb oder Parallelbetrieb vorliegt.

2. Verfahren nach Anspruch 1, **dadurch gekennzeichnet, dass** unter Verwendung wenigstens eines an dem wenigstens einen Brauchwasserheizkreislauf angeordneten Sensors die Gesamtzeit der Brauchwassererwärmung an einem Tag bestimmt wird und aus der Gesamtzeit der Brauchwassererwärmung an einem Tag und dem Tageswert der an dem Tag für die Brauchwassererwärmung aufgewendeten Energiemenge ein Tages-Leistungswert für die Brauchwassererwärmung bestimmt wird.

3. Verfahren nach einem der vorherigen Ansprüche, **dadurch gekennzeichnet, dass** zumindest die Tageswerte der für die Brauchwassererwärmung und Heizwassererwärmung innerhalb eines Tages verbrauchten Energiemenge, insbesondere auch wenigstens ein Meßwert des wenigstens einen an dem wenigstens einen Brauchwasserkreislauf angeordneten Sensors in eine Datenverarbeitungsanlage insbesondere über wenigstens ein Telekommunikationsnetz übertragen werden und innerhalb der Datenverarbeitungsanlage die Bestimmung der benötigten Leistung des Heizkessels erfolgt.

4. Verfahren nach Anspruch 3, **dadurch gekennzeichnet, dass** die Tageswerte der für die Brauchwassererwärmung und Heizwassererwärmung innerhalb eines Tages verbrauchten Energiemenge vom jeweiligen Wärmemengenzähler über dessen jeweilige Kommunikationsschnittstelle über ein Telekommunikationsnetz, insbesondere ein erstes Telekommunikationsnetz in eine Datenverarbeitungsanlage übertragen wird.

5. Verfahren nach Anspruch 3 oder 4, **dadurch gekennzeichnet, dass** der wenigstens eine Sensor an dem wenigstens einen Brauchwasserheizkreislauf gebildet wird durch
a. den Wärmemengenzähler des Brauchwasserkreislaufes und dieser Wärmemengenzähler
i. einen die Gesamtzeit der Brauchwassererwärmung an einem Tag anzeigenden Wert ermittelt oder
ii. in mehreren, insbesondere aneinander anschließenden jeweils gleichlangen Zeitintervallen eines Tages jeweils einen den Heizzustand des Brauchwasserkreislaufes in dem jeweiligen Zeitintervall anzeigenden Zustandswert ermittelt oder
iii. in mehreren, insbesondere aneinander anschließenden jeweils gleichlangen Zeitintervallen eines Tages jeweils wenigstens einen Temperaturmesswert mittels eines Temperatursensors des Wärmemengenzählers erfasst, aus dem jeweils ein den Heizzustand des Brauchwasserkreislaufes in dem jeweiligen Zeitintervall anzeigenden Zustandswert ermittelt wird / ermittelbar ist
und der Wärmemengenzähler den die Gesamtzeit anzeigen Wert oder alle Temperaturmesswerte oder alle Zustandswerte aller Zeitintervalle über ein Telekommunikationsnetz, insbesondere das erste Telekommunikationsnetz an die Datenverarbeitungsanlage überträgt oder
b. einen jeweiligen Temperatursensor und mittels eines Datenloggers in mehreren, insbesondere aneinander anschließenden jeweils gleichlangen Zeitintervallen eines Tages jeweils wenigstens ein Temperaturmesswert des wenigstens einen Temperatursensors erfasst, gespeichert und über ein Telekommunikationsnetz, insbesondere ein zweites Telekommunikationsnetz an die Datenverarbeitungsanlage übertragen wird,
insbesondere wobei in der Datenverarbeitungsanlage aus allen Temperaturwerten eines Tages die Gesamtzeit ermittelt wird, die für die Erwärmung des Brauchwasserkreislaufes an einem Tag aufgewendet wurde oder aus allen Zustandswerten eines Tages die Gesamtzeit ermittelt wird, die für die Erwärmung des Brauchwasserkreislaufes an einem Tag aufgewendet wurde, insbesondere durch Multiplikation der Anzahl aller eine Brauchwassererwärmung anzeigenden Zustandswerte eines Tages mit der Zeitdauer eines einzelnen Zeitintervalles.

6. Verfahren nach einem der vorherigen Ansprüche, **dadurch gekennzeichnet, dass** bei einer Bestimmung von mehreren Tages-Leistungswerten für Brauchwassererwärmung und/oder Heizwassererwärmung an aufeinanderfolgenden Tagen ein jeweiliger neuer Tages-Leistungswert bestimmt wird, insbesondere
a. anhand eines Models, das in Abhängigkeit mehrerer Tages-Leistungswerte gebildet wird,
b. des maximalen Wertes mehrerer, insbesondere aller Tages-Leistungswerte
c. eines Mittelwertes mehrerer, insbesondere aller Tages-Leistungswerte
und die benötigte Leistung des Heizkessels in Abhängigkeit wenigstens eines neuen Tages-Leistungswert ermittelt wird.

7. Verfahren nach einem der vorherigen Ansprüche, **dadurch gekennzeichnet, dass** ein jeder Tages-Leistungswert für die Brauchwassererwärmung und/oder Heizwassererwärmung vor einer Bildung eines neuen Tages-Leistungswertes oder vor einer Ermittlung der benötigten Leistung des Heizkessels korrigiert wird zur Berücksichtigung eines Leerstandes in einer Liegenschaft, insbesondere durch Multiplikation mit einem den Leerstand repräsentierenden Faktor.

8. Verfahren nach einem der vorherigen Ansprüche, **dadurch gekennzeichnet, dass** bei einer vorrangigen Erwärmung des Brauchwasserkreislaufes vor dem Heizwasserkreislauf die benötigte Leistung des Heizkessels ermittelt wird als ein Wert größer oder gleich dem Maximum eines Paares von Tages-Leistungswerten, insbesondere neuen Tages-Leistungswerten von Brauchwassererwärmung und Heizwassererwärmung, insbesondere wobei der Tagesleistungswert der Heizwassererwärmung ermittelt wird aus dem Tageswert der für die Heizwassererwärmung innerhalb eines Tages verbrauchten Energiemenge dividiert durch die Heizzeit, die für die Heizwassererwärmung innerhalb von 24 aufgewendet wurde, insbesondere die sich ergibt aus 24 Stunden abzüglich der Gesamtzeit, die für die Brauchwassererwärmung aufgewendet wurde.

9. Verfahren nach Anspruch 8, **dadurch gekennzeichnet, dass** bei einer vorgesehenen Nachtabsenkung der ermittelte Tages-Leistungswert korrigiert wird, insbesondere durch Multiplikation mit dem Verhältnis von Tageslaufzeit zur Gesamtzeit aus Tageslaufzeit und Nachtlaufzeit.

10. Verfahren nach einem der vorherigen Ansprüche, **dadurch gekennzeichnet, dass** bei einer Erwärmung des Brauchwasserkreislaufes parallel zur Erwärmung des Heizwasserkreislauf die benötigte Leistung des Heizkessels ermittelt wird als ein Wert größer oder gleich der Summe von Tages-Leistungswert für die Brauchwassererwärmung und Tages-Leistungswert für die Heizwassererwärmung.

11. Verfahren nach einem der vorherigen Ansprüche, **dadurch gekennzeichnet, dass** auf einen Parallelbetrieb geschlossen wird, wenn durch den Vergleich eine Anzahl von übereinstimmenden Zustandswerten innerhalb eines Tages ermittelt wird, die über einem festgelegten Schwellwert liegt.

12. Verfahren nach einem der vorherigen Ansprüche, **dadurch gekennzeichnet, dass** auf einen eine aktive Erwärmung des Brauchwasserkreislaufes und/oder des Heizwasserkreislaufes anzeigenden Zustandswert geschlossen wird, wenn
a. aus den Temperaturmesswerten eines Temperatursensors am Kreislauf eine positive zeitliche Ableitung ermittelt wird
b. wenn zwischen Temperaturmesswerten von Temperatursensoren an Vorlauf und Rücklauf eines Heizkreises eine einen Schwellwert übersteigende Differenz ermittelt wird
c. aus den Temperaturmesswerten eines Temperatursensors an einer Brauchwasser-Zirkulationsleitung eine positive zeitliche Ableitung ermittelt wird
d. wenn zwischen Temperaturmesswerten von Temperatursensoren an Vorlauf und Rücklauf einer Brauchwasser-Zirkulationsleitung eine einen Schwellwert übersteigende Differenz ermittelt wird
e. ein Volumenstrom ermittelt wird, der einen Schwellwert übersteigt

## Claims

1. Method for determining the output required from a heat generator, by means of which, in a property, service water within at least one service water circuit and also hot water for room heating within at least one hot water circuit is heated,
**characterized in that** for a measurement period of at least one day, preferably for several days, in each case repeatedly,
a. a daily value for the quantity of energy consumed for the service water heating within one day is determined from at least one measured value from a heat meter in the at least one service water heating circuit,
b. a daily value for the quantity of energy consumed for the hot water heating within one day is determined from at least one measured value from a heat meter in the at least one hot water circuit, and
c. a daily output value for the service water heating is determined from the daily value for the quantity of energy expended for the service water heating on the day, and
d. a daily output value for the hot water heating is determined from the daily value for the quantity of energy expended for the hot water heating on the day, and
e. depending on at least one daily output value for the service water heating and at least one daily output value for the hot water heating, the output required from the heating boiler is determined
f. and wherein, depending on whether the heating of the service water takes place with priority before the heating of the hot water or whether heating of the service water takes place chronologically in parallel with the hot water circuit, the output required is determined differently from case to case,
g. wherein it is determined automatically whether priority operation or parallel operation is present, **in that** both for the hot water circuit and for the service water circuit a state value is respectively determined at time intervals, which indicates whether active heating is present within a time interval and, for each time interval, the state value of the service water circuit is compared with the state value of the hot water circuit and, by means of the comparison, it is concluded whether priority operation or parallel operation is present.

2. Method according to Claim 1, **characterized in that** the total time of the service water heating on one day is determined by using at least one sensor arranged on the at least one service water heating circuit, and a daily output value for the service water heating is determined from the total time of the service water heating on one day and the daily value for the quantity of energy expended for the service water heating on the day.

3. Method according to one of the preceding claims, **characterized in that** at least the daily values for the quantity of energy used for the service water heating and hot water heating within one day, in particular also at least one measured value from the at least one sensor arranged in the at least one service water circuit, are transferred to a data processing system, in particular via at least one telecommunications network, and the determination of the output required from the heating boiler is carried out within the data processing system.

4. Method according to Claim 3, **characterized in that** the daily values for the quantity of energy used for the service water heating and hot water heating within one day are transferred from the respective heat meter via its respective communications interface to a data processing system via a telecommunications network, in particular a first telecommunications network.

5. Method according to Claim 3 or 4, **characterized in that** the at least one sensor on the at least one service water heating circuit is formed by
a. the heat meter of the service water circuit, and this heat meter
i. determines a total time of the service water heating on a value indicating a day, or
ii. in a plurality of time intervals of a day, in particular respectively equally long time intervals following one another, respectively determines a state value indicating the heating state of the service water circuit in the respective time interval, or
iii. in a plurality of time intervals of a day, in particular respectively equally long time intervals following one another, respectively determines at least one temperature measured value by means of a temperature sensor of the heat meter, from which temperature measured value a respective state value indicating the heating state of the service water circuit in the respective time interval is or can be determined,
and the heat meter transfers the value indicating the total time or all the temperature measured values or all the state values of all the time intervals to the data processing system via a telecommunications network, in particular the first telecommunications network, or
b. in a plurality of time intervals of a day, in particular respectively equally long time intervals following one another, a respective temperature sensor and, by means of a data logger, respectively at least one temperature measured value from the at least one temperature sensor is detected, stored and transferred to the data processing system via a telecommunications network, in particular a second telecommunications network,
in particular wherein, in the data processing system, the total time expended for the heating of the service water circuit in a day is determined from all temperature values of a day, or the total time expended for heating the service water circuit in a day is determined from all state values of a day, in particular by multiplication of the number of all state values of a day indicating a service water heating by the duration of an individual time interval.

6. Method according to one of the preceding claims, **characterized in that** during a determination of a plurality of daily output values for service water heating and/or hot water heating on successive days, a respective new daily output value is determined, in particular
a. by using a model which is formed on the basis of a plurality of daily output values,
b. of the maximum value of a plurality of output values, in particular all the daily output values
c. an average value of a plurality of the daily output values, in particular all the daily output values,
and the output required from the heating boiler is determined on the basis of least one new daily output value.

7. Method according to one of the preceding claims, **characterized in that** before a formation of a new daily output value or before a determination of the output required from the heating boiler, each daily output value for the service water heating and/or hot water heating is corrected in order to take into account an empty state in a property, in particular by multiplication by a factor representing the empty state.

8. Method according to one of the preceding claims, **characterized in that** in the event of priority heating of the service water circuit before the hot water circuit, the output required from the heating boiler is determined as a value greater than or equal to the maximum of a pair of daily output values, in particular new daily output values of service water heating and hot water heating, in particular wherein the daily output value for hot water heating is determined from the daily value for the quantity of energy used for the hot water heating within one day divided by the heating time which was expended for the hot water heating within 24, in particular which results from 24 hours minus the total time which was expended for the service water heating.

9. Method according Claim 8, **characterized in that** in the event of envisaged night-time lowering, the determined daily output value is corrected, in particular by multiplication by the ratio of day running time to the total time comprising day running time and night running time.

10. Method according to one of the preceding claims, **characterized in that** in the event of heating the service water circuit in parallel with the heating of the hot water circuit, the output required from the heating boiler is determined as a value greater than or equal to the sum of daily output value for the service water heating and daily output value for the hot water heating.

11. Method according to one of the preceding claims, **characterized in that** it is concluded that there is parallel operation if, as a result of the comparison, a number of coincident state values within a day which lies above a defined threshold value is determined.

12. Method according to one of the preceding claims, **characterized in that** it is concluded that there is a state value indicating active heating of the service water circuit and/or the hot water circuit if
a. a positive time derivative is determined from the temperature measured values of a temperature sensor on the circuit
b. if a difference exceeding a threshold value is determined between temperature measured values from temperature sensors on feed and return of a heating circuit
c. a positive time derivative is determined from the temperature measured values of a temperature sensor on a service water circulation line
d. if a difference exceeding a threshold value is determined between temperature measured values from temperature sensors on feed and return of a service water circulation line
e. a volume flow which exceeds a threshold value is determined.

## Revendications

1. Procédé de détermination de la puissance nécessaire d'un générateur de chaleur au moyen duquel, dans un immeuble, des eaux usées circulant à l'intérieur d'au moins un circuit d'eaux usées, et de l'eau chaude circulant à l'intérieur d'au moins un circuit d'eau chaude, sont chauffées pour le chauffage de pièces,
**caractérisé en ce que**, pendant un temps de mesure d'au moins un jour, de préférence de plusieurs jours, les étapes suivantes sont respectivement répétées :
a. à partir d'au moins une valeur de mesure d'un compteur de quantité de chaleur se trouvant dans l'au moins un circuit de chauffage d'eaux usées, une valeur quotidienne de la quantité d'énergie consommée pour le chauffage des eaux usées au cours d'une journée est déterminée, et
b. à partir d'au moins une valeur de mesure d'un compteur de quantité de chaleur se trouvant dans l'au moins un circuit d'eau chaude, une valeur quotidienne de la quantité d'énergie consommée pour le chauffage de l'eau chaude au cours d'une journée est déterminée, et
c. à partir de la valeur quotidienne de la quantité d'énergie consommée au cours de la journée pour chauffer les eaux usées, une valeur de puissance quotidienne pour le chauffage des eaux usées est déterminée, et
d. à partir de la valeur quotidienne de la quantité d'énergie utilisée au cours de la journée pour le chauffage de l'eau chaude, une valeur de puissance quotidienne pour le chauffage de l'eau chaude est déterminée, et
e. en fonction d'au moins une valeur de puissance quotidienne pour le chauffage des eaux usées et d'au moins une valeur de puissance quotidienne pour le chauffage de l'eau chaude, la puissance nécessaire pour la chaudière est obtenue,
f. et dans lequel la puissance nécessaire est obtenue le cas échéant de manière différente en fonction du fait de savoir si le chauffage des eaux usées s'effectue de manière prioritaire avant le chauffage de l'eau chaude ou du fait de savoir si un chauffage des eaux usées est effectué en parallèle, dans le temps, avec le circuit d'eau chaude,
g. dans lequel il est automatiquement établi si un fonctionnement prioritaire ou un fonctionnement en parallèle se produit en déterminant au cours d'un intervalle de temps, pour le circuit d'eau chaude ainsi que pour le circuit d'eaux usées, une valeur d'état respective qui indique si un chauffage actif se produit au cours d'un intervalle de temps et, pour chaque intervalle de temps, la valeur d'état du circuit d'eaux usées est comparée à la valeur d'état du circuit d'eau chaude et il en est conclu, au moyen de ladite comparaison, qu'il se produit un fonctionnement prioritaire ou un fonctionnement en parallèle.

2. Procédé selon la revendication 1, **caractérisé en ce que** le temps total du chauffage des eaux usées au cours d'une journée est déterminé par utilisation d'au moins un capteur disposé sur l'au moins un circuit de chauffage des eaux usées et **en ce qu'**une valeur de puissance quotidienne destinée au chauffage des eaux usées est déterminée à partir du temps total du chauffage des eaux usées au cours d'une journée et de la valeur quotidienne de la quantité d'énergie consommée au cours de la journée pour le chauffage des eaux usées.

3. Procédé selon l'une quelconque des revendications précédentes, **caractérisé en ce qu'**au moins les valeurs quotidiennes de la quantité d'énergie consommée pour le chauffage des eaux usées et pour le chauffage de l'eau chaude au cours d'une journée, ainsi qu'également en particulier au moins une valeur de mesure de l'au moins un capteur disposé sur l'au moins un circuit d'eaux usées sont transmises dans une installation de traitement de données, en particulier par l'intermédiaire d'au moins un réseau de télécommunication, et **en ce que** la détermination de la puissance nécessaire de la chaudière est effectuée à l'intérieur de l'installation de traitement de données.

4. Procédé selon la revendication 3, **caractérisé en ce que** les valeurs quotidiennes de la quantité d'énergie consommée au cours d'une journée pour le chauffage des eaux usées et pour le chauffage de l'eau chaude sont transmises par le compteur de quantité de chaleur respectif par l'intermédiaire de son interface de communication respective sur un réseau de télécommunication, en particulier un premier réseau de télécommunication, dans une installation de traitement de données.

5. Procédé selon la revendication 3 ou 4, **caractérisé en ce que** l'au moins un capteur est formé, sur l'au moins un circuit de chauffage des eaux usées, par
a. le compteur de quantité de chaleur du circuit d'eaux usées et **en ce que** ledit compteur de quantité de chaleur
i. obtient une valeur indiquant le temps total du chauffage des eaux usées au cours d'une journée, ou
ii. au cours de plusieurs intervalles de temps respectifs de même longueur, en particulier consécutifs, d'une journée, obtient une valeur d'état indiquant l'état de chauffage du circuit d'eaux usées au cours de l'intervalle de temps respectif, ou
iii. au cours de plusieurs intervalles de temps respectifs de même longueur, en particulier consécutifs, d'une journée, détecte au moins une valeur de mesure de température respective au moyen d'un capteur de température du compteur de quantité de chaleur, à partir de laquelle une valeur d'état indiquant l'état de chauffage du circuit d'eaux usées est/peut respectivement être obtenue,
et le compteur de quantité de chaleur transmet la valeur indiquant le temps total ou toutes les valeurs de mesure de température ou toutes les valeurs d'état de tous les intervalles de temps par l'intermédiaire d'un réseau de télécommunication, en particulier le premier réseau de télécommunication, à l'installation de traitement des données, ou
b. un capteur de température respectif et au moins une valeur de mesure de température de l'au moins un capteur de température est détectée au moyen d'un enregistreur de données au cours de plusieurs intervalles de temps d'une journée respectifs de même longueur, en particulier consécutifs, et est stockée puis transmise à l'installation de traitement de données par l'intermédiaire d'un réseau de télécommunication, en particulier d'un deuxième réseau de télécommunication,
en particulier, dans lequel le temps total est obtenu à partir de toutes les valeurs de température d'une journée, lequel temps total a été utilisé pour le chauffage du circuit d'eaux usées au cours d'une journée, ou à partir de toutes les valeurs d'état d'une journée, le temps total qui a été utilisé pour le chauffage du circuit d'eaux usées au cours d'une journée est obtenu, en particulier en multipliant le nombre de toutes les valeurs d'état indiquant un chauffage des eaux usées au cours d'une journée par la durée d'un intervalle de temps individuel.

6. Procédé selon l'une quelconque des revendications précédentes, **caractérisé en ce que**, lors d'une détermination de plusieurs valeurs de puissance quotidiennes pour le chauffage des eaux usées et/ou le chauffage de l'eau chaude au cours de jours consécutifs, une nouvelle valeur de puissance quotidienne respective est déterminée, en particulier,
a. sur la base d'un modèle, qui est établi en fonction de plusieurs valeurs de puissance quotidiennes,
b. de la valeur maximale de plusieurs, en particulier de la totalité, des valeurs de puissance quotidiennes,
c. d'une valeur moyenne de plusieurs, en particulier de la totalité des valeurs de puissance quotidiennes, et la puissance nécessaire de la chaudière est obtenue en fonction d'au moins une nouvelle valeur de puissance quotidienne.

7. Procédé selon l'une quelconque des revendications précédentes, **caractérisé en ce que** chaque valeur de puissance quotidienne est corrigée pour le chauffage des eaux usées et/ou le chauffage de l'eau chaude avant l'établissement d'une nouvelle valeur de puissance quotidienne ou avant l'obtention de la puissance nécessaire de la chaudière afin de tenir compte de l'état vide d'un immeuble, en particulier par multiplication par un facteur représentant ledit état vide.

8. Procédé selon l'une quelconque des revendications précédentes, **caractérisé en ce que**, lors d'un chauffage prioritaire du circuit d'eaux usées avant le circuit d'eau chaude, la puissance nécessaire de la chaudière est obtenue comme étant une valeur supérieure ou égale au maximum d'une paire de valeurs de puissance quotidiennes, en particulier de nouvelles valeurs de puissance quotidiennes du chauffage des eaux usées et du chauffage de l'eau chaude, en particulier dans lequel la valeur de puissance quotidienne du chauffage de l'eau chaude est obtenue à partir de la valeur quotidienne de la quantité d'énergie consommée pour le chauffage de l'eau chaude au cours d'une journée, divisée par le temps de chauffage qui a été utilisé pour le chauffage de l'eau chaude au cours de 24, en particulier qui en résulte sur 24 heures moins le temps total qui a été utilisé pour le chauffage des eaux usées.

9. Procédé selon la revendication 8, **caractérisé en ce que**, pour une réduction nocturne prévue, la valeur de puissance quotidienne obtenue est corrigée, en particulier par multiplication par le rapport entre le temps de fonctionnement quotidien et le temps total constitué par la somme du temps de fonctionnement de jour et du temps de fonctionnement de nuit.

10. Procédé selon l'une quelconque des revendications précédentes, **caractérisé en ce que**, pour un chauffage du circuit d'eaux usées parallèlement au chauffage du circuit d'eau chaude, la puissance nécessaire de la cuve est obtenue en tant que valeur supérieure ou égale à la somme de la valeur de la puissance quotidienne pour le chauffage des eaux usées et de la valeur de la puissance quotidienne pour le chauffage de l'eau chaude.

11. Procédé selon l'une quelconque des revendications précédentes, **caractérisé en ce qu'**il est déterminé qu'il se produit un fonctionnement en parallèle lorsque la comparaison indique qu'un nombre obtenu de valeurs d'état concordantes au cours d'une journée se situe au-dessus d'une valeur de seuil définie.

12. Procédé selon l'une quelconque des revendications précédentes, **caractérisé en ce qu'**il est conclu que la valeur d'état indique un chauffage actif du circuit d'eaux usées et/ou du circuit d'eau chaude lorsque
a. une dérivée temporelle positive est obtenue à partir des valeurs de mesure de température d'un capteur de température sur le circuit,
b. lorsqu'une différence dépassant une valeur de seuil est obtenue entre des valeurs température de capteurs de température au niveau du départ et du retour d'un circuit de chauffage,
c. une dérivée temporelle positive est obtenue à partir des valeurs de mesure de température d'un capteur de température sur une conduite de circulation des eaux usées,
d. lorsqu'une différence dépassant une valeur de seuil est obtenue entre des valeurs de mesure de température de capteurs de température sur le départ et le retour d'une conduite de circulation des eaux usées,
e. un débit volumique qui dépasse une valeur de seuil est obtenu.
